Europäisches Patentamt

**European Patent Office**

**Office européen des brevets**

(19)

(11) Publication number: **0 006 681**
**A1**

# EUROPEAN PATENT APPLICATION

(21) Application number: **79300853.3**

(22) Date of filing: **17.05.79**

(51) Int. Cl.³: **A 01 N 9/02, C 07 D 251/00**

(30) Priority: **17.06.78 GB 2720578**
**23.08.78 GB 3432778**

(43) Date of publication of application: **09.01.80**
**Bulletin 80/1**

(84) Designated Contracting States: **AT BE CH DE FR GB IT LU NL SE**

(71) Applicant: **FISONS LIMITED, Fison House 9 Grosvenor Street, London (GB)**

(72) Inventor: **van Hoogstraten, Samuel David, 36 Butchers Hill, Ickleton Cambridge (GB)**
Inventor: **Ayres, Robert John, 9 Greenfield Close, Stapleford Cambridge (GB)**

(74) Representative: **Murphy, Finnbarr et al, Fisons Limited Fison House Princes Street, Ipswich 1P1 1QH (GB)**

(54) **Herbicidal composition and method.**

(57) The invention provides a method of combating weeds at a locus infested or liable to be infested with them, which method comprises applying to the locus an effective of:

(a) one or more of 2-chloro-4-diethylamino-6-ethylamino-1,3,5-triazine (trietazine), 2-chloro-4,6-di(ethylamino)-1,3,5-triazine (simazine), 2-t-butylamino-4-ethylamino-6-methylthio-1,3,5-triazine (terbutryne) and 3-(3-chloro-4-methoxyphenyl)-1,1-dimethylurea (metoxuron); and

(b) N-(1-ethylpropyl)-2,6-dinitro-3,4-xylidine (pendimethalin).

In addition the invention provides a herbicidal composition comprising from 0.05 to 95 % by weight in total of (a) and (b), each of components (a) and (b) being present in an amount of from 1 to 99 % by weight of the total amount of those components which is present, in association with a suitable carrier and/or surface active agent.

27205/78

This invention concerns a method of combating weeds, herbicidal compositions, and their preparation.

The compounds trietazine, simazine, metoxuron and pendimethalin are each known herbicides. However, their herbicidal action when used individually is not always entirely satisfactory.

We have found that the herbicidal action of these compounds is improved when they are used in certain combinations.

Accordingly, in one aspect, this invention provides a method of combating weeds at a locus infested or liable to be infested with them, which method comprises applying to the locus an effective amount of:

(a)  one or more of 2-chloro-4-diethylamino-6-ethylamino-1,3,5-triazine (trietazine), 2-chloro-4,6-di(ethylamino)-1,3,5-triazine (simazine), 2-t-butylamino-4-ethylamino-6-methylthio-1,3,5-triazine (terbutryne) and 3-(3-chloro-4-methoxyphenyl)-1,1-dimethylurea (metoxuron); and

(b)  N-(1-ethylpropyl)-2,6-dinitro-3,4-xylidine (pendimethalin).

In addition the invention provides a herbicidal composition comprising from 0.05 to 95% by weight in total of (a) and (b), each of components (a) and (b) being present in an amount of from 1 to 99% by weight of the total amount of those components which is present, in association with a suitable carrier and/or surface active agent.

It has been found that (a) and (b) seem to render weeds highly

0006681

susceptible to the action of the other, so that the present method and composition are unexpectedly advantageous, especially when used in the control of weeds in crops. Mixtures of (a) and (b) are effective against weeds to a surprising degree. The method and composition can be used to combat a wider range of weed species than when either (a) or (b) is used alone. Components (a) and (b) are also effective at lower dosage rates than those at which (a) or (b) alone is effective. In addition they are safe to many crops.

Component (a) preferably comprises just one of the three specified compounds, or a mixture of simazine and metoxuron.

Each of components (a) and (b) is preferably present in an amount of from 20 to 80%, especially 30 to 70%, by weight of the total amount of those components.

Where component (a) comprises a mixture of two or more of simazine and trietazine and terbutryne each is desirably present in an amount of from 10 to 80% by weight of that component. Where component (a) is a mixture which includes metoxuron, however, the metoxuron is preferably present in an amount of from 80 to 95% by weight of that component.

The compositions comprising (a) and (b) can be prepared by admixing the ingredients. Usually, the compositions are initially produced in the form of concentrates containing 0.5 to 95%, preferably 1 to 85%, especially 10 to 50%, by weight in total of components (a) and (b), and these are diluted with water or a hydrocarbon for application, generally such that the concentration in total of the essential components (a) and (b) is 0.05 to 4% by weight.

The carrier in the concentrate may be a solid, which may be finely divided. Examples of suitable solids are limestone, clays, sand, mica, chalk, attapulgite, diatomite, perlite and sepiolite, and synthetic solid carriers, e.g. silicas, silicates, lignosulphonates, peat and solid fertilizers.

Wettable powders soluble or dispersible in water may be formed by admixing the essential herbicides in particulate form with a particulate carrier or by spraying molten compound onto the particulate carrier, admixing with a wetting agent and a dispersing agent and finely grinding the whole powder mixture.

The carrier is preferably however a liquid, e.g. water (e.g. water used to dilute a concentrate for application). If water is employed as carrier in a concentrate, an organic solvent may also be present as carrier, though this is not usually employed. A concentrate containing water as carrier may advantageously also contain a surface active agent.

The carrier may be a liquid other than water, for example an organic solvent, usually a water-immiscible solvent. e.g. a hydrocarbon which boils within the range 130 - 270$^{o}$C, for example xylene, in which the essential herbicides are dissolved or suspended. A concentrate containing an organic solvent suitably also contains a surface active agent so that the concentrate acts as a self-emulsifiable oil on admixture with water.

An aerosol composition may be formed by admixing the components (a) and (b) with a propellant, e.g. a polyhalogenated alkane such as dichlorodifluoromethane, and suitably also with a solvent.

A flowable suspension concentrate may be formed if the compound has a low water solubility by grinding the compound with water, a wetting agent and a suspending agent.

A flowable suspension concentrate may alternatively be formed wherein the carrier is a hydrocarbon which boils in the range 130-270°C rather than water.

Thus, the present composition can for example be solid (e.g. dust or granules) and contain a solid carrier, or liquid (e.g. an emulsifiable concentrate) and contain a liquid carrier which is a hydrocarbon which boils in the range 130-270°C.

The term 'surface active agent' is used in the broad sense to include materials variously called emulsifying agents, dispersing agents and wetting agents. Such agents are well known in the herbicide art.

The surface active agents used may comprise anionic surface active agents, for example mono- or di-esters of phosphoric acid with fatty alcohol ethoxylates or salts of such esters, fatty alcohol sulphates such as sodium dodecyl sulphate, ethoxylated fatty alcohol sulphates, ethoxylated alkylphenol sulphates, lignin sulphonates, petroleum sulphonates, alkylaryl sulphonates such as alkyl-benzene sulphonates or lower alkyl-naphthalene sulphonates, salts of sulphonated naphthalene-formaldehyde condensates, salts of sulphonated phenol-formaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quarternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, sodium oleoyl N-methyltauride, dialkyl sulphosuccinates, alkyl phenol ethoxylates, and fatty alkyl ethoxylates.

For control of weeds in a crop, the compositions of the present invention are preferably applied pre-emergence of the crop, and may if desired be applied pre-sowing of the crop.

Instead of applying (a) and (b) together in a composition such as is discussed above, they can be applied separately in analogous compositions containing just (a) or (b), particularly as a chemical weed control programme or part of a chemical weed control programme in a crop season. Sequential application of (a) and (b) is of particular advantage.

In a preferred sequence relating to a crop, (a) is applied pre-emergence of the crop followed by (b) post-emergence of the crop.

A further herbicide can be used in the present method besides (a) and (b). Thus, (a) and (b) can be applied separately and a further herbicide applied with (a) and/or (b). Alternatively, the further herbicide may be applied separately from (a) and (b). Alternatively, a composition comprising a mixture of (a), (b) and the further herbicide can be applied. Usually the proportions of (a) to the further herbicide are from 1:10 to 10:1 by weight, preferably from 1:3 to 3:1 by weight. Examples of such further herbicides include phenoxyaliphatic acids (e.g. 2,4-D, 2,4,5-T, CMPP, 2,4-DB and MCPB) including functional derivatives thereof, substituted ureas (e.g. monuron, diuron, neburon, monolinuron, chlortoluron, isoproturon, linuron, and benzthiazuron), triazines (e.g. atrazine, cyanazine, prometryne and metamitron), DNOC, PCP, ioxynil, bromoxynil, dichlobenil, diquat, paraquat, endothal, dalapon, TCA, barban, EPTC, butylate, diallate, allidochlor, propachlor, bromacil, lenacil, maleic hydrazide, salts of methanearsonic acid, cacodylic acid, aminotriazole, picloram, trifluralin, S,S,S-tributyl phosphorotrithioate, 3-(1-$\sqrt{\phantom{x}}$ethoxyamino$\sqrt{\phantom{x}}$propylidene)-6-ethyl-2H-pyran-2,4(3H)-dione, phenmedipham, azolamid, triallate, propamide, carbetamide, diphenamid, pebulate, benfluralin, metobromuron, pyrazon or N-(chloroacetyle)-N-(2,6-diethylphenyl) glycine ethyl ester.

The compounds may, if desired, be employed in association with a herbicidal antidote (a substance having the property of improving the safety to crops of the compounds), e.g. N,N-diallyl-2,2-dichloro-acetamide, 4'-chloro-2-hydroxyiminoacetanilide, 2,2-dimethyl-3-dichloroacetyloxazolidine, ∝-(cyanomethoximino)benzacetonitrile or 1,8-naphthalic anhydride. Although the antidote may be applied in admixture with either or both of the active compounds, it may be applied separately, and especially as a treatment for the crop seeds. The ratio by weight of components (a) and (b) in total to antidote is preferably from 1:4 to 4:1.

Fertilizers or pesticides other than herbicides can also be employed with the present essential herbicides, as also may non-phytotoxic oils, e.g. Fyzol 11E.

The present method and compositions may be applied to plants, the soil, land or aquatic areas. The method and compositions may be employed against a wide range of weeds, e.g. Polygonus spp, mayweeds (e.g. Matricaria spp and Anthemis spp), chickweed (Stellaria media), charlock (Sinapis arvensis), cleavers (Galium aparine),

blackgrass (<u>Alopecurus</u> <u>myosuroides</u>), field pansy (<u>Viola</u> <u>arvensis</u>), speedwells (<u>Veronica</u> spp) and forget-me-not (<u>Myosobis</u> <u>arvensis</u>).

The present method and compositions are preferably used for selectively combating weeds at a locus in which a crop is growing or is to grow.

The crop to which the present method and compositions are most advantageously applied to combat weeds is preferably a cereal crop, e.g. barley or wheat, including winter barley and winter wheat, to which the method and compositions are surprisingly safe.

In the present method, usually 0.2-10 kg, preferably 0.5-8 kg, especially 1-4 kg, <u>in</u> <u>toto</u> of (a) and (b) are applied per hectare. Usually 0.1-6 kg, preferably 0.2-4.8 kg, especially 0.3-2.8 kg, of (b) are applied per hectare.

The invention is further described, though only by way of illustration, in the following Examples.

Example 1

Mixtures of trietazine and penoxalin were applied pre-emergence to plots sown with winter wheat (Bouquet) and winter barley (M Otter), together with the weed species chickweed, cleavers, mayweed and speedwell. Four months later the plots were evaluated relative to untreated control plots. Both mixtures tested were safe to the barley and wheat, and the following percentage growth reductions were obtained on the weeds:

|                                                        | Chickweed | Cleavers | Mayweed | Speedwell |
|--------------------------------------------------------|-----------|----------|---------|-----------|
| trietazine (0.75 kg/ha) + pendimethalin (0.38 kg/ha)   | 100       | 88       | 100     | -         |
| trietazine (0.5 kg/ha) + pendimethalin (0.75 kg/ha)    | 100       | 83       | 100     | 100       |

Example 2

The mixtures set out below were applied as tank mixes, in the autumn at the rates indicated, in 200 litres/hectare. Weed growth reduction relative to an untreated control (0%) was recorded in the spring as follows:

| Mixture | Chickweed | Mayweed | Field speedwell | Ivy-leaved speedwell | Red dead nettle | Field pansy | Poppy | Forget-me-not | Knotgrass | Parsley piert |
|---------|-----------|---------|-----------------|----------------------|-----------------|-------------|-------|---------------|-----------|---------------|
| pendimethalin (0.6 kg/ha) + metoxuron (1.06 kg/ha) + simazine (0.066 kg/ha) | 99 | 89 | 100 | 100 | 100 | 100 | 100 | 99 | 76 | 100 |
| pendimethalin (0.6 kg/ha) + trietazine (0.6 kg/ha) | 100 | 96 | 100 | 100 | 100 | 100 | 100 | 100 | 84 | 100 |
| pendimethalin (0.6 kg/ha) + trietazine (0.8 kg/ha) | 100 | 98 | 100 | 100 | 100 | 100 | 100 | 100 | 84 | 100 |
| pendimethalin (0.6 kg/ha) + terbutryne (0.75 kg/ha) | 100 | 73 | 100 | 94 | 100 | 100 | 100 | 100 | 43 | 100 |

0006681

Claims

1. A herbicidal composition which comprises:

(a) one or more of 2-chloro-4-diethylamino-6-ethylamino-1,3,5-triazine, 2-chloro-4,6-di(ethylamino)-1,3,5-triazine, 2-t-butyl-amino-4-ethylamino-6-methylthio-1,3,5-triazine, and 3-(3-chloro-4-methoxyphenyl)-1,1-dimethylurea; and

(b) N-(1-ethylpropyl)-2,6-dimitro-3,4-xylidine, in association with a suitable carrier and/or surface active agent, each of components (a) and (b) being present in an amount of from 1 to 99% by weight of the total amount of those components which is present, and the total amount of (a) and (b) which is present being from 0.05 to 95% by weight of the composition.

2. A composition according to claim 1 wherein each of components (a) and (b) is present in an amount of from 20 to 80% by weight of the total amount of those components which is present.

3. A composition according to claim 1 or claim 2 wherein the total amount of (a) and (b) which is present is from 10 to 50% by weight of the composition.

4. A composition according to any of claims 1 to 3 wherein component (a) comprises just one of the specified compounds, or a mixture of 2-chloro-4,6-di(ethylamino)-1,3,5-triazine and 3-(3-chloro-4-methoxyphenyl)-1,1-dimethylurea.

5. A method of combating weeds at a locus infested or liable to be infested with them, which comprises applying to the locus an effective amount of:

(a) one or more of 2-chloro-4-diethylamino-6-ethylamino-1,3,5-triazine, 2-chloro-4,6-di(ethylamino)-1,3,5-triazine, 2-t-butylamino-4-ethylamino-6-methylthio-1,3,5-triazine and 3-(3-chloro-4-methoxyphenyl)-1,1-dimethylurea; and

(b) N-(1-ethylpropyl)-2,6-dinitro-3,4-xylidine.

6. A method according to claim 5 wherein from 0.2 to 10 kg in total of components (a) and (b) are applied per hectare.

7. A method according to claim 5 or claim 6 wherein from 0.1 to 6 kg of component (b) are applied per hectare.

8. A method according to any of claims 5 to 7 wherein components (a) and (b) are applied in the form of a composition according to any of claims 1 to 4.

9. A method according to any of claims 5 to 8 wherein the locus treated is a locus at which a cereal crop is growing or is to grow.

10. A method according to claim 9 wherein the application of components (a) and (b) is made pre-emergence of the crop.

European Patent Office

**EUROPEAN SEARCH REPORT**

0006681
Application number

EP 79 30 0853

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | CHEMICAL ABSTRACTS, vol. 85, no.1, 5 July 1976, page 103, abstract 1127p, Columbus, Ohio USA A.I. KOVACS, "Weed control in winter wheat with AC 92553 alone and in combination with other herbicides". & Proc. Br. Weed Control Conf., 1974, vol. 1, no. 12, pages 91-98. | 1-3, 5-10 | A 01 N 9/02 C 07 D 251/00 |
| | -- | | |
| | GB - A - 1 348 428 (BASF) * Claim 1 * | 1 | **TECHNICAL FIELDS SEARCHED (Int.Cl.³)** |
| | -- | | A 01 N 9/02 |
| | US - A - 3 920 742 (AM CYAN) * Claim 3 * | 1 | |
| | ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 21-09-1979 | NATUS |

EPO Form 1503.1 06.78